# EUROPEAN PATENT SPECIFICATION

(11) **EP 3 783 122 B1**
(45) Date of publication and mention of the grant of the patent: **05.06.2024**
(21) Application number: 19789319.1
(22) Date of filing: 19.03.2019
(51) Int. Cl.: C21D 9/28, C21D 1/10, C21D 1/18, C21D 1/667, H05B 6/00, C21D 1/42, C21D 1/56, C21D 9/00, C21D 9/30, C21D 1/60

(54) **INDUCTION HARDENING APPARATUS**
INDUKTIONSHÄRTUNGSVORRICHTUNG
DISPOSITIF DE DURCISSEMENT PAR INDUCTION

(30) Priority: 16.04.2018 JP 2018078264
(43) Date of publication of application: 24.02.2021
(73) Proprietor: NIPPON STEEL CORPORATION, Chiyoda-ku Tokyo 100-8071 (JP)
(72) Inventor: YAMANE Akihito, Tokyo 100-8071 (JP); IMANISHI Kenji, Tokyo 100-8071 (JP); HATA Toshiyuki, Tokyo 100-8071 (JP); KOZUKA Chihiro, Tokyo 100-8071 (JP)
(74) Representative: Zimmermann & Partner Patentanwälte mbB
(86) International application number: PCT/JP2019/011453
(87) International publication number: WO 2019/202896

(56) References cited:
- JP-A- 2004 292 921
- JP-A- 2004 292 921
- JP-A- 2012 177 144
- JP-B2- 3 057 611
- JP-B2- 5 774 871
- JP-B2- S5 332 097
- JP-U- S60 156 170
- JP-Y1- S4 629 535

## Description

### [Technical Field of the Invention]

The present invention relates to an induction hardening apparatus.

Priority is claimed on Japanese Patent Application No. 2018-078264, filed April 16, 2018.

### [Related Art]

Various surface treatments may be applied to components requiring a long life. Particularly, induction hardening improves the surface hardness, wear resistance, and fatigue resistance of the surface of components and is thus widely used. Therefore, various induction hardening apparatuses have been proposed. For example, in a case where a long member such as a shaft-shaped body made of steel is subjected to induction hardening, so-called traverse hardening is performed. Traverse hardening is a method of hardening a shaft-shaped body while moving an induction heating coil (hereinafter, referred to as induction coil) and a cooler relative to the shaft-shaped body in an axial direction.

In the traverse hardening, the shaft-shaped body is locally heated by the induction coil until at least the surface layer of the shaft-shaped body becomes austenitic. Then, the cooler that follows the induction coil sprays a cooling liquid or the like onto the surface of the heated shaft-shaped body to rapidly cool the surface within a short period of time, whereby the surface layer has a martensitic structure.

In the traverse hardening in the related art, in order to shorten the time from rapid heating to rapid cooling so as to maintain the uniformity of the steel structure of the shaft-shaped body after hardening, the induction coil and the cooler are disposed close to each other to make the facility compact. However, when the induction coil and the cooler are disposed close to each other, there may be cases where the cooling liquid sprayed from the cooler bounces on the surface of the shaft-shaped body, scatters to the vicinity of the induction coil, and excessively cools the shaft-shaped body. In particular, a shaft-shaped body in which a large-diameter portion having an outer diameter larger than that of a shaft main body is provided in a part of the shaft main body has a level difference between the shaft main body and the large-diameter portion. Therefore, when a cooling liquid sprayed onto the shaft-shaped body collides with the level difference, there may be cases where the cooling liquid is likely to bounce to the induction coil side, and excessive cooling of the shaft-shaped body frequently occurs.

Patent Document 1 proposes an induction hardening apparatus in which a nozzle through which compressed air is sprayed, as a means for shielding the splash of a cooling liquid, is provided between an induction heating portion and a cooling liquid spraying portion.

Patent Document 2 proposes a hardening apparatus in which, between a heater that heats a portion to be hardened and a cooler that ejects a cooling fluid to the portion being heated by the heater, a spray fluid ejector for preventing the cooling fluid from adhering to the portion being heated is provided. JP S60 156170 U and JP 2004 292921 A disclose induction hardening methods with a shielding.

### [Prior Art Document]

### [Patent Document]

[Patent Document 1] Japanese Unexamined Patent Application, First Publication No. 2001-32017
[Patent Document 2] Japanese Unexamined Patent Application, First Publication No. 2014-214326

### [Disclosure of the Invention]

### [Problems to be Solved by the Invention]

However, the hardening apparatuses described in Patent Documents 1 and 2 have a problem in that although scattering of a fluid such as the cooling liquid can be prevented, scattering of solid matter cannot be prevented. Examples of the solid matter include scales formed on the surface of the shaft-shaped body. For example, when the surface layer of the shaft-shaped body is heated to an austenite region by the induction coil, a scale is generated on the surface of the shaft-shaped body, and there may be cases where the scale is peeled off from the shaft-shaped body by the cooling liquid sprayed from the cooler, scatters, and adhere to the induction coil. Since the scale is not a fluid but solid matter, even the apparatuses described in Patent Documents 1 and 2 cannot prevent the scale from scattering and adhering to the induction coil. When the scale adheres to gaps between wound wire portions of the induction coil, a short circuit may occur in the induction coil, and there may be cases where the induction coil is damaged due to abnormal heating or the like. Alternatively, there is a concern that a voltage applied to the induction coil may suddenly change due to the occurrence of a short circuit, an abnormal load may be applied to a power supply, and a power supply circuit may be broken. Furthermore, when the heating coil or the power supply circuit fails, an operation has to be stopped, and there is concern that the efficiency of the hardening operation may significantly decrease.

The present invention has been made in view of the above circumstances, and an object thereof is to provide an induction hardening apparatus capable of preventing scattering of scale generated on the surface of a shaft-shaped body during induction hardening.

### [Means for Solving the Problem]

In order to solve the above problems, the present invention is as described in the appended claims.

### [Effects of the Invention]

According to the induction hardening apparatus according to each of the above aspects of the present invention, it is possible to provide an induction hardening apparatus capable of preventing scattering of scale generated on the surface of a shaft-shaped body during induction hardening.

### [Brief Description of the Drawings]

FIG. 1 is a cutaway view illustrating a part of an induction hardening apparatus according to a first embodiment of the present invention, and is a side view schematically illustrating the induction hardening apparatus.
FIG. 2 is a cutaway view illustrating a main part of the induction hardening apparatus according to the first embodiment of the present invention, and is a side view schematically illustrating the main part of the induction hardening apparatus.
FIG. 3 is a cutaway view illustrating a main part of the induction hardening apparatus according to the first embodiment of the present invention, and is a side view schematically illustrating the main part of the induction hardening apparatus.
FIG. 4A is a view for describing an operation of the induction hardening apparatus according to the first embodiment of the present invention, and is a plan view schematically illustrating a state in which a shaft main body of a shaft-shaped body passes through a shielding portion.
FIG. 4B is a view for describing an operation of the induction hardening apparatus according to the first embodiment of the present invention, and is a plan view schematically illustrating a state in which a large-diameter portion of the shaft-shaped body passes through the shielding portion.
FIG. 5 is a cutaway view illustrating a main part of an induction hardening apparatus according to a second embodiment of the present invention, and is a side view schematically illustrating the main part of the induction hardening apparatus.
FIG. 6 is a plan view schematically illustrating a main part of the induction hardening apparatus according to the second embodiment of the present invention.
FIG. 7A is a view for describing an operation of the induction hardening apparatus according to the second embodiment of the present invention, and is a plan view schematically illustrating a state in which the shaft main body of the shaft-shaped body passes through a shielding portion.
FIG. 7B is a view for describing an operation of the induction hardening apparatus according to the second embodiment of the present invention, and is a plan view schematically illustrating a state in which the large-diameter portion of the shaft-shaped body passes through the shielding portion.

### [Embodiments of the Invention]

### (First Embodiment)

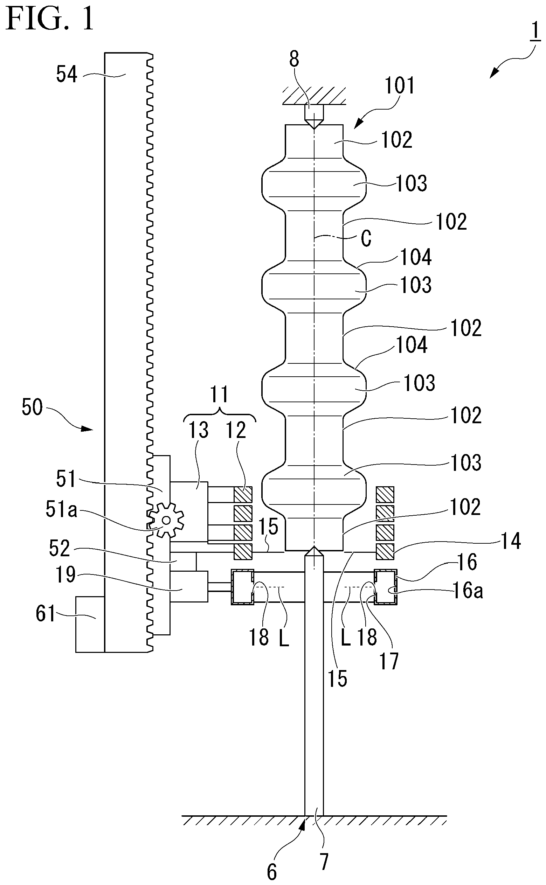

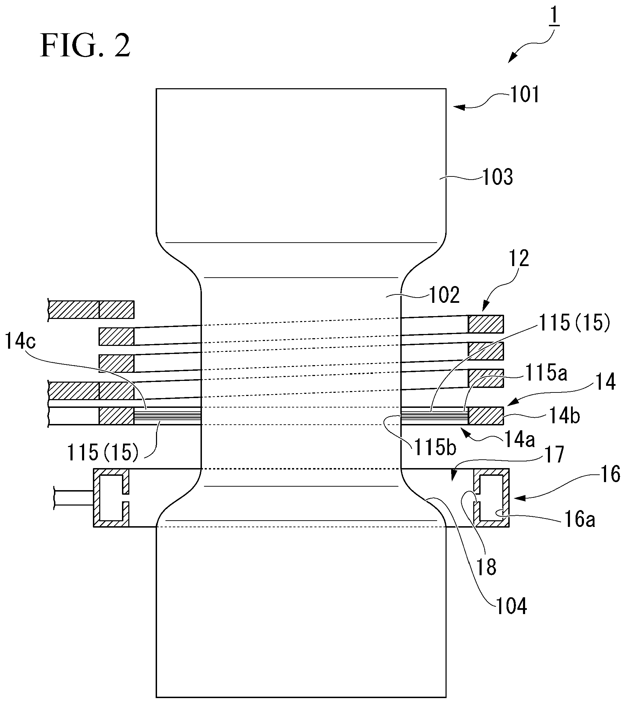

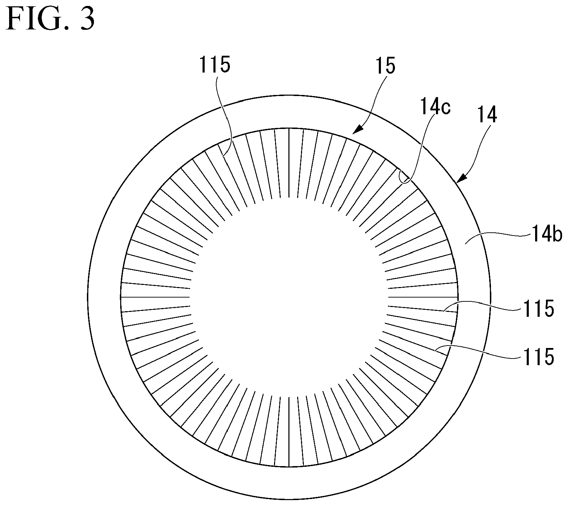

Hereinafter, an induction hardening apparatus according to an embodiment of the present invention will be described with reference to FIGS. 1 to 4B. It is obvious that the present invention is not limited to the following embodiments. Also, it is obvious that the respective elements of the following embodiments can be combined within the scope of the present invention.

As illustrated in FIG. 1, an induction hardening apparatus 1 of the present embodiment is an apparatus for performing traverse hardening on a shaft-shaped body 101 such as an axle for a railway vehicle using a high frequency current. The traverse hardening is a method of hardening the shaft-shaped body 101 while moving an induction heating coil (hereinafter, referred to as an induction coil) and a cooling portion relative to the shaft-shaped body 101 in an axial direction.

Examples of the shaft-shaped body applicable to the induction hardening apparatus 1 of the present embodiment may comprise a shaft-shaped body which is provided with a large-diameter portion in a part of a shaft main body and thus has a level difference portion between the shaft main body and the large-diameter portion, and a shaft-shaped body having a shaft main body and not having a large-diameter portion and a level difference portion.

First, an example of the shaft-shaped body 101 will be described. The shaft-shaped body 101, which is subjected to traverse hardening by the induction hardening apparatus 1 of the present embodiment, comprises a shaft main body 102 and a large-diameter portion 103 having a diameter (outer diameter) larger than that of the shaft main body 102. The shaft-shaped body 101 illustrated in FIG. 1 has four large-diameter portions 103, the large-diameter portions 103 are separated from each other, and the shaft main body 102 is provided between the large-diameter portions 103. The outer diameters of the large-diameter portions 103 may be substantially equal to each other or may be different from each other. The shaft main body 102 and the large-diameter portions 103 are each formed in a cylindrical shape. The central axes of the shaft main body 102 and the large-diameter portions 103 are disposed coaxially with the common axis. Hereinafter, the common axis is referred to as an axis C.

Furthermore, at the boundary between the shaft main body 102 and the large-diameter portion 103, there is a level difference portion 104 for connecting the shaft main body 102 and the large-diameter portion 103. The level difference portion 104 is inclined at a predetermined angle with respect to the axis C of the shaft-shaped body 101. The inclination angle is, for example, in a range of 15° to 90°. In the induction hardening apparatus 1 of the present embodiment, the shaft-shaped body 101 is disposed so that the axis C extends along an up-down direction.

The number of the large-diameter portions 103 included in the shaft-shaped body 101 is not limited to four, and may be one to three or five or more.

The shaft-shaped body 101 is formed of steel.

As illustrated in FIG. 1, the induction hardening apparatus 1 comprises a heating portion 11 having a coil member 12, a cooling portion 16, and a shielding portion 14. The heating portion 11, the cooling portion 16, and the shielding portion 14 are connected to a moving device 50 and can be moved by the moving device 50. Furthermore, the induction hardening apparatus 1 is provided with a support member 6 for supporting the shaft-shaped body 101.

The moving device 50 comprises a rack member 54, a support plate 51, and a motor 52. The rack member 54 extends along the up-down direction. The heating portion 11, the cooling portion 16, and the shielding portion 14 are fixed to the support plate 51. Furthermore, the support plate 51 is provided with a pinion gear 51a, and the pinion gear 51a meshes with the rack member 54. The pinion gear 51a is configured to rotate such that the support plate 51 moves upward or downward with respect to the rack member 54 when the motor 52 is driven.

The support member 6 comprises a lower center 7 and an upper center 8. The lower center 7 supports the lower end of the shaft-shaped body 101 from below the shaft-shaped body 101. The upper center 8 supports the upper end of the shaft-shaped body 101 from above the shaft-shaped body 101. Each of the centers 7 and 8 supports the shaft-shaped body 101 so that the axis C extends in the up-down direction. In addition, the shaft-shaped body 101 is rotatable about the axial direction. The shaft-shaped body 101 may be rotated relative to the moving device 50 by rotating the lower center 7 and the upper center 8.

The induction hardening apparatus 1 of the present embodiment performs traverse hardening on the shaft-shaped body 101 by raising the heating portion 11, the cooling portion 16, and the shielding portion 14 with respect to the shaft-shaped body 101 by operating the moving device 50.

The heating portion 11 comprises the coil member 12, which is an induction coil, and a current transformer 13.

The coil member 12 is formed in an annular shape in which a coil wire material is spirally wound, and a high frequency current flows therethrough. The inner diameter of the coil member 12 is larger than the outer diameter of the large-diameter portion 103 of the shaft-shaped body 101. The shaft-shaped body 101 can be inserted into the coil member 12.

The current transformer 13 is electrically and mechanically connected to each end portion of the coil member 12. The current transformer 13 passes the high frequency current through the coil member 12.

The current transformer 13 is attached to the support plate 51. Accordingly, the coil member 12 is relatively movable along the axial direction of the shaft-shaped body 101.

The cooling portion 16 is formed in an annular shape in the present embodiment. A through-hole 17 is formed in the cooling portion 16 so as to penetrate therethrough in the up-down direction. The shaft-shaped body 101 can be inserted into the through-hole 17 of the cooling portion 16. An internal space 16a is formed in the cooling portion 16. On the inner circumferential surface of the cooling portion 16 facing the through-hole 17 side, a plurality of spray nozzles 18 are formed separately from each other in a circumferential direction. Each spray nozzle 18 communicates with the internal space 16a. The cooling portion 16 is disposed below the coil member 12.

A pump 19 is connected to the cooling portion 16. The pump 19 supplies a cooling liquid L such as water to the internal space 16a of the cooling portion 16. The cooling liquid L supplied to the internal space 16a is sprayed toward the shaft-shaped body 101 through the plurality of spray nozzles 18 to cool the shaft-shaped body 101.

The shape of the cooling portion 16 is not limited to the annular shape, and may be circular, elliptical, rectangular parallelepiped, or the like.

The pump 19 is attached to the support plate 51. Accordingly, the cooling portion 16 can be relatively moved along the axial direction of the shaft-shaped body 101.

Next, the shielding portion 14 will be described with reference to FIGS. 1 to 3. The shielding portion 14 is disposed between the coil member 12 and the cooling portion 16. The shielding portion 14 is provided with an annular base portion 14b having an opening part 14a through which the shaft-shaped body 101 can be inserted, and a brush portion 15. The annular base portion 14b is a member formed in an annular shape and has the opening part 14a. The opening part 14a is formed in a size such that the large-diameter portion 103 of the shaft-shaped body 101 can be inserted therethrough. The brush portion 15 protrudes from the annular base portion 14b toward the opening part 14a of the annular base portion 14b, and contacts the shaft-shaped body 101 when the shaft-shaped body 101 is inserted.

The shielding portion 14 is attached to the support plate 51. Accordingly, the shielding portion 14 can be relatively moved along the axial direction of the shaft-shaped body 101 together with the coil member 12 and the cooling portion 16.

The brush portion 15 comprises a plurality of wire bodies 115. A longitudinal base end 115a of each wire body 115 is connected to the annular base portion 14b, and a longitudinal tip end 115b thereof protrudes toward the opening part 14a side. The wire bodies 115 are provided over the whole circumference of an inner circumferential surface 14c of the annular base portion 14b. The density of the wire bodies 115 may be appropriately set to such a density as to prevent scattering of scale depending on the size of the gap formed between the inner circumferential surface 14c of the annular base portion 14b and the shaft-shaped body 101 when the shaft-shaped body 101 is inserted into the opening part 14a of the annular base portion 14b. The longitudinal direction of the wire body 115 is in a direction toward the center of the opening part 14a. The length of the wire body 115 may be set to a length such that the longitudinal tip end 115b of the wire body 115 comes into contact with the surface of the shaft main body 102 of the shaft-shaped body 101 when the shaft-shaped body 101 is inserted through the shielding portion 14.

The shape of the annular base portion 14b is not limited to the annular shape, and may be circular or elliptical. The shape of the opening part 14a is not limited, and may be circular or elliptical.

The material of the wire body 115 is non-magnetic and elastically deformable, and specifically, is preferably made of austenitic stainless steel or glass fiber.

Next, a method of performing traverse hardening on the shaft-shaped body 101 using the induction hardening apparatus of the present embodiment will be described.

First, as illustrated in FIG. 1, the coil member 12, the shielding portion 14, and the cooling portion 16 are positioned on the lower end side of the shaft-shaped body 101. Next, the current transformer 13 is driven to cause a high frequency current to flow through the coil member 12. In addition, the pump 19 is driven to eject the cooling liquid L from the plurality of spray nozzles 18 of the cooling portion 16. Next, the motor 52 is driven to move the support plate 51 upward with respect to the rack member 54. Accordingly, the coil member 12, the shielding portion 14, and the cooling portion 16 allow the shaft-shaped body 101 to be inserted therethrough in this order and are moved upward. When the shaft-shaped body 101 is inserted into the coil member 12, a high frequency current flows on the surface of the shaft-shaped body 101 due to electromagnetic induction of the coil member 12, and Joule heat is generated due to electric resistance of the shaft-shaped body 101, so that the surface layer of the shaft-shaped body 101 is heated to an austenite formation region. Subsequently, the cooling portion 16 is raised to the point heated by the coil member 12, and the cooling liquid L is sprayed to the heated point of the shaft-shaped body 101. Accordingly, at least the surface layer of the shaft-shaped body 101 is rapidly cooled and a martensitic structure is generated. As the coil member 12 and the cooling portion 16 are raised from the lower end toward the upper end of the shaft-shaped body 101, heating by the coil member 12 and cooling by the cooling portion 16 are sequentially performed, and the surface of the shaft-shaped body 101 is induction-hardened. In order to cause the shaft-shaped body 101 to be uniformly heated and uniformly cooled, it is preferable to rotate the shaft-shaped body 101 during hardening around the axial direction.

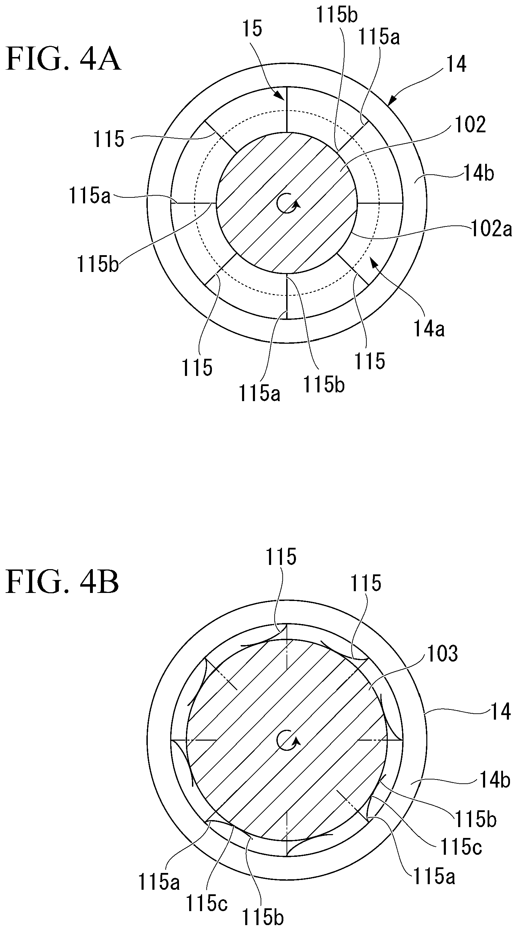

FIGS. 4A and 4B are plan views schematically illustrating the shaft-shaped body 101 and the shielding portion 14. In FIGS. 4A and 4B, in order to clearly illustrate the deformation of the wire bodies 115, only eight wire bodies are illustrated and illustration of most of the other wire bodies is omitted. The wire bodies not illustrated in FIGS. 4A and 4B deform similarly to the wire bodies 115.

As illustrated in FIG. 4A, when the shaft main body 102 of the shaft-shaped body 101 is inserted into the shielding portion 14, the brush portion 15 provided on the annular base portion 14b comes into contact with a surface 102a of the shaft main body 102. More specifically, the tip ends 115b of the plurality of wire bodies 115 come into contact with the surface 102a of the shaft main body 102. At this time, the wire bodies 115 that constitutes the brush portion 15 remain almost straight. The gap between the annular base portion 14b and the shaft main body 102 enters a state of being substantially blocked by the brush portion 15 comprising the wire bodies 115.

When the level difference portion 104 of the shaft-shaped body 101 is inserted into the shielding portion 14 subsequent to the shaft main body 102, the wire bodies 115 are gradually pushed away by the level difference portion 104, and the wire bodies 115 gradually elastically deform. Since the shaft-shaped body 101 is rotating, the wire bodies 115 are deformed such that the direction of the tip end 115b thereof follows the rotation direction of the shaft-shaped body 101. In addition, the wire bodies 115 come into contact with the surface of the level difference portion 104 at middle portions 115c between the tip ends 115b and the base ends 115a. The gap between the annular base portion 14b and the level difference portion 104 enters a state of being substantially blocked by the brush portion 15 comprising the wire bodies 115. In particular, in a case where the level difference portion 104 is inserted into the shielding portion 14, the gap between the annular base portion 14b and the level difference portion 104 becomes gradually narrower than in the case where the shaft main body 102 is inserted into the shielding portion 14, and the density of the wire bodies 115 gradually increases.

Furthermore, when the large-diameter portion 103 of the shaft-shaped body 101 is inserted into the shielding portion 14 subsequent to the level difference portion 104, as illustrated in FIG. 4B, the wire bodies 115 are pushed away by the large-diameter portion 103, and the wire bodies 115 are elastically deformed. Since the shaft-shaped body 101 is rotating, the wire bodies 115 are deformed such that the direction of the tip end 115b thereof follows the rotation direction of the shaft-shaped body 101. In addition, the wire bodies 115 come into contact with the surface of the large-diameter portion 103 at the middle portions 115c between the tip ends 115b and the base ends 115a. The gap between the annular base portion 14 b and the large-diameter portion 103 enters a state of being substantially blocked by the brush portion 15 comprising the wire bodies 115. In particular, in a case where the large-diameter portion 103 is inserted into the shielding portion 14, the gap between the annular base portion 14b and the large-diameter portion 103 becomes narrower than in the case where the shaft main body 102 is inserted into the shielding portion 14, and the density of the wire bodies 115 in the gap between the annular base portion 14b and the large-diameter portion 103 is increased.

When the surface of the shaft-shaped body 101 is heated to the austenite formation region by the coil member 12 during traverse hardening, scale is generated on the surface of the shaft-shaped body 101. Thereafter, when the cooling liquid L sprayed from the cooling portion 16 collides with the surface of the shaft-shaped body 101, the impact causes the scale to peel off. The peeled scale immediately drops downward. However, there is concern that the scale adhering to the level difference portion 104 between the shaft main body 102 and the large-diameter portion 103 of the shaft-shaped body 101 may be scattered toward the coil member 12 side by the spray of the cooling liquid L. This is because, since the level difference portion 104 is inclined with respect to the axial direction, when the cooling liquid L collides with the level difference portion 104, the cooling liquid L is repelled in a diagonally upward direction, and the scale is scattered in the diagonally upward direction together with the cooling liquid L and adheres to the coil member 12. There may be cases where the scale has conductivity, and there is concern that the scale infiltrating into the gap between the windings of the coil member 12 may cause a short circuit in the coil member 12.

However, in the induction hardening apparatus 1 of the present embodiment, as described above, since the shielding portion 14 having the brush portion 15 is provided between the coil member 12 and the cooling portion 16, when the shaft-shaped body 101 is passed through the shielding portion 14, the gap between the annular base portion 14b of the shielding portion 14 and the shaft-shaped body 101 is always filled with the brush portion 15 comprising the wire body 115, and therefore the scale scattered by the spray of the cooling liquid L collides with the brush portion 15, so that the adhesion of the scale to the coil member 12 is prevented. In particular, even if the shaft-shaped body 101 has portions having different outer diameters, such as the shaft main body 102, the large-diameter portion 103, and the level difference portion 104, since the wire bodies 115 constituting the brush portion 15 are elastically deformable, the gap between the annular base portion 14b of the shielding portion 14 and the shaft-shaped body 101 is filled with the brush portion 15 without any gap, and scattering of the scale toward the coil member 12 side is prevented.

As described above, according to the induction hardening apparatus 1 of the present embodiment, since the shielding portion 14 having the annular base portion 14b and the brush portion 15 is provided between the coil member 12 and the cooling portion 16 and the brush portion 15 is configured to come into contact with the shaft-shaped body 101 when the shaft-shaped body 101 is inserted, even if solid matter such as scale is scattered by the spray of the cooling liquid L, the scattered scale collides with the brush portion 15, so that scattering of the scale toward the coil member 12 side can be prevented. In particular, in the shaft-shaped body 101 having the level difference portion 104, there is a concern that the scale may be scattered toward the coil member 12 side as the cooling liquid L collides with the level difference portion 104, since the brush portion 15 is provided, scattering of the scale can be reliably prevented.

Furthermore, according to the induction hardening apparatus 1 of the present embodiment, since the brush portion 15 comprises the non-magnetic wire bodies 115, the brush portion 15 does not affect the induction hardening. In addition, since the wire bodies 115 are elastically deformable, when the brush portion 15 passes through the level difference portion 104 and the large-diameter portion 103 of the shaft-shaped body 101, the brush portion 15 can be deformed along the shape of the shaft-shaped body 101. Therefore, there is no concern that a gap may be formed between the brush portion 15 and the shaft-shaped body 101, and scattering of the scale toward the coil member 12 can be prevented.

Moreover, according to the induction hardening apparatus 1 of the present embodiment, since the longitudinal direction of the wire bodies 115 of the brush portion 15 is directed to the center of the opening part 14a, when the shaft-shaped body 101 is inserted into the induction hardening apparatus 1, the coil member 12 is shielded from the cooling portion 16 by the brush portion 15, and the scattered scale collides with the brush portion 15, so that scattering of the scale toward the coil member 12 side can be prevented.

In addition, according to the induction hardening apparatus of the present embodiment, since the wire bodies 115 of the brush portion 15 are made of austenitic stainless steel or glass fiber, the wire bodies 115 do not affect induction hardening.

### (Second Embodiment)

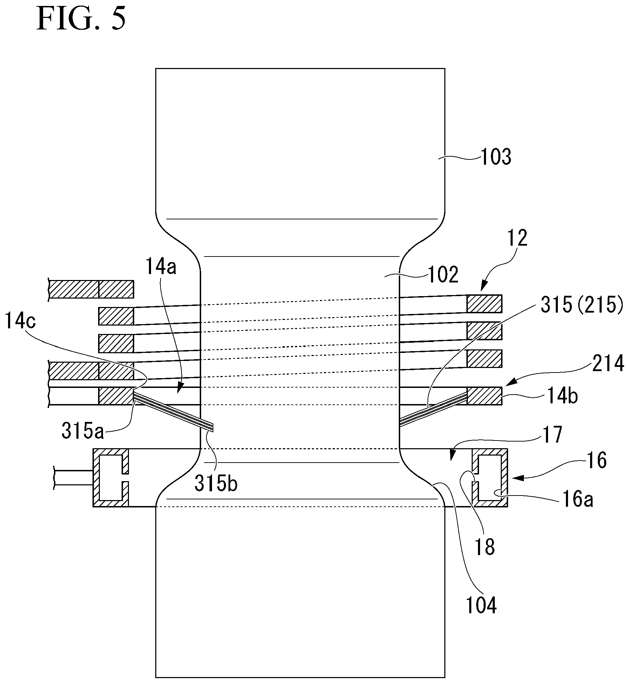

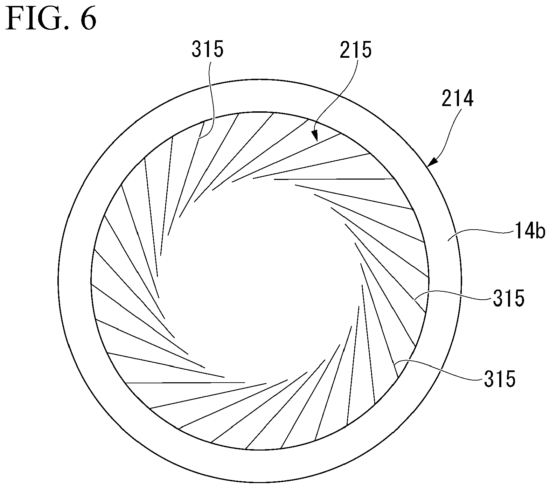

Next, an induction hardening apparatus according to a second embodiment of the present invention will be described with reference to FIGS. 5 to 7B. Among constituent elements illustrated in FIGS. 5 to 7B, the same constituent elements as those illustrated in FIGS. 1 to 4B are denoted by the same reference symbols as those in FIGS. 1 to 4B, and detailed description thereof will be omitted.

A shielding portion 214 of the induction hardening apparatus of the present embodiment is disposed between the coil member 12 and the cooling portion 16 as illustrated in FIG. 5. The shielding portion 214 is provided with the annular base portion 14b having the opening part 14a through which the shaft-shaped body 101 can be inserted, and a brush portion 215.

The brush portion 215 of the present embodiment comprises a plurality of wire bodies 315. A longitudinal base end 315a of each wire body 315 is connected to the annular base portion 14b, and a longitudinal tip end 315b thereof protrudes toward the opening part 14a side. The wire bodies 315 are provided over the whole circumference of the inner circumferential surface 14c of the annular base portion 14b. The density of the wire bodies 315 may be appropriately set to such a density as to prevent scattering of scale depending on the size of the gap formed between the inner circumferential surface 14c of the annular base portion 14b and the shaft-shaped body 101 when the shaft-shaped body 101 is inserted into the opening part 14a of the annular base portion 14b.

In addition, the longitudinal direction of the wire body 315 is in a direction inclined with respect to the direction toward the center of the opening part 14a, and is in a direction inclined toward the cooling portion 16 side. In other words, the longitudinal direction of the wire body 315 is directed obliquely downward so as to draw a spiral. More specifically, the tip end 315b of the wire body 315 may be in the direction following the rotation direction of the shaft-shaped body 101 instead of being in the direction toward the center of the opening part. Furthermore, the tip end 315b of the wire body 315 may be in a direction toward the rear side when the shielding portion 214 moves relative to the shaft-shaped body 101, that is, toward the cooling portion 16 side in the case of the present embodiment. By causing the wire body 315 in such a direction, when the wire body 315 slides on the surface of the shaft-shaped body 101, there is no concern that the wire body 315 may move violently. The length of the wire body 315 may be set to a length such that a middle portion 315c of the wire body 315 comes into contact with the surface of the shaft main body 102 of the shaft-shaped body 101 when the shaft-shaped body 101 is inserted through the shielding portion 214.

The material of the wire body 315 is non-magnetic and elastically deformable as in the first embodiment, and specifically, is preferably made of austenitic stainless steel or glass fiber.

Next, a method of performing traverse hardening on the shaft-shaped body 101 using the induction hardening apparatus of the present embodiment will be described.

Similarly to the first embodiment, by raising the coil member 12 and the cooling portion 16 from the lower end toward the upper end of the shaft-shaped body 101, heating by the coil member 12 and cooling by the cooling portion 16 are sequentially performed, and the surface of the shaft-shaped body 101 is induction-hardened.

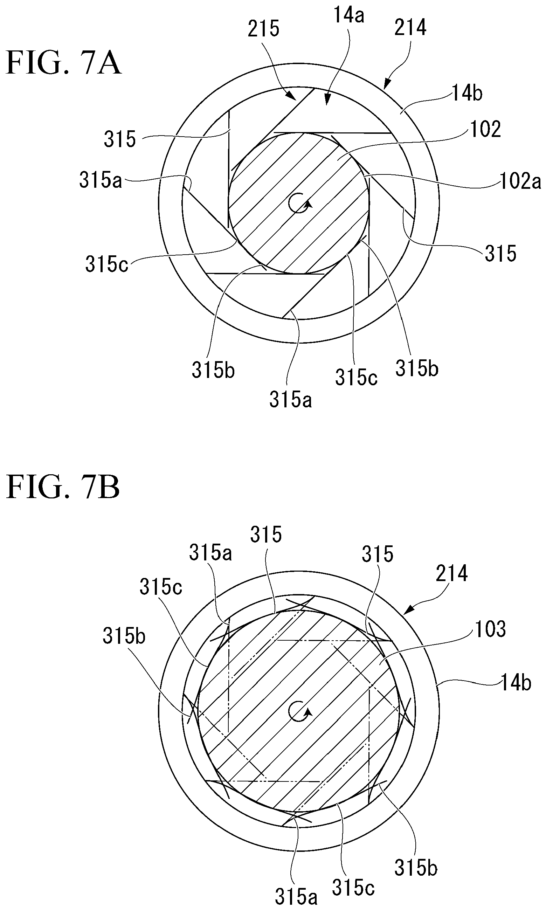

FIGS. 7A and 7B are plan views schematically illustrating the shaft-shaped body 101 and the shielding portion 214. In FIGS. 7A and 7B, in order to clearly illustrate the deformation of the wire bodies 315, only eight wire bodies are illustrated and illustration of most of the other wire bodies is omitted. The wire bodies not illustrated in FIGS. 7A and 7B deform similarly to the wire bodies 315.

When the shaft main body 102 of the shaft-shaped body 101 is inserted into the shielding portion 214 according to the present embodiment, as illustrated in FIG. 7A, the brush portion 215 provided on the annular base portion 14b comes into contact with the surface 102a of the shaft main body 102. More specifically, the middle portions 315c of the plurality of wire bodies 315 come into contact with the surface 102a of the shaft main body 102. At this time, the wire bodies 315 that constitutes the brush portion 215 remain almost straight. The gap between the annular base portion 14b and the shaft main body 102 enters a state of being substantially blocked by the brush portion 215 comprising the wire bodies 315. The tip end 315b of the wire body 315 is in the direction following the rotation direction of the shaft-shaped body 101, and is in the direction toward the rear side of the shielding portion 214 in a movement direction.

When the level difference portion 104 of the shaft-shaped body 101 is inserted into the shielding portion 214 subsequent to the shaft main body 102, the wire bodies 315 are gradually pushed away by the level difference portion 104, and the wire bodies 315 gradually elastically deforms. The wire body 315 is elastically deformed particularly at the base end 315a, and comes into contact with the surface of the level difference portion 104 at the middle portion 315c. The gap between the annular base portion 14b and the level difference portion 104 enters a state of being substantially blocked by the brush portion 215 comprising the wire bodies 315. In particular, in a case where the level difference portion 104 is inserted into the shielding portion 214, the gap between the annular base portion 14b and the level difference portion 104 becomes gradually narrower than in the case where the shaft main body 102 is inserted into the shielding portion 214, and the density of the wire bodies 315 gradually increases.

Furthermore, when the large-diameter portion 103 of the shaft-shaped body 101 is inserted into the shielding portion 214 subsequent to the level difference portion 104, as illustrated in FIG. 7B, the wire bodies 315 are pushed away by the large-diameter portion 103, and the wire bodies 315 are elastically deformed. The wire body 315 is elastically deformed particularly at the base end 315a, and the wire body 315 comes into contact with the surface of the large-diameter portion 103 at the middle portion 315c. The gap between the annular base portion 14b and the large-diameter portion 103 enters a state of being substantially blocked by the brush portion 215 comprising the wire bodies 315. In particular, in a case where the large-diameter portion 103 is inserted into the shielding portion 214, the gap between the annular base portion 14b and the large-diameter portion 103 becomes narrower than in the case where the shaft main body 102 is inserted into the shielding portion 214, and the density of the wire bodies 315 in the gap between the annular base portion 14b and the large-diameter portion 103 is increased.

As described above, in the induction hardening apparatus of the present embodiment, since the shielding portion 214 having the brush portion 215 is provided between the coil member 12 and the cooling portion 16, when the shaft-shaped body 101 is passed through the shielding portion 214, the gap between the annular base portion 14b of the shielding portion 214 and the shaft-shaped body 101 is always filled with the brush portion 215 comprising the wire body 315, and therefore the scale scattered by the spray of the cooling liquid L collides with the brush portion 215, so that the adhesion of the scale to the coil member 12 is prevented. In particular, even if the shaft-shaped body 101 has portions having different outer diameters, such as the shaft main body 102, the large-diameter portion 103, and the level difference portion 104, since the wire bodies 315 constituting the brush portion 215 are elastically deformable, the gap between the annular base portion 14b of the shielding portion 214 and the shaft-shaped body 101 is filled with the brush portion 215 without any gap, and scattering of the scale toward the coil member 12 side is prevented.

According to the induction hardening apparatus of the present embodiment, since the longitudinal direction of the wire body 315 of the brush portion 215 is in the direction inclined with respect to the direction toward the center of the opening part 14a and is the direction inclined toward the cooling portion 16 side, the coil member 12 is shielded from the cooling portion 16 by the brush portion 215 when the shaft-shaped body 101 is inserted into the induction hardening apparatus, and the scattered scale collides with the brush portion 215, so that scattering of the scale toward the coil member 12 side can be prevented.

Furthermore, in the present embodiment, when the wire body 315 comes into contact with the shaft-shaped body 101, the middle portion 315c of the wire body 315 is brought into contact with the shaft-shaped body 101, instead of the tip end 315b of the wire body 315. In addition, the longitudinal direction of the wire body 315 is directed to the rotation direction of the shaft-shaped body 101 and the direction opposite to the movement direction of the shielding portion 214. Accordingly, when the shaft-shaped body 101 passes through the shielding portion 214, the wire bodies 315 are not disturbed and no gap is generated, and scattering of the scale toward the coil member 12 side can be prevented.

In addition, in the present embodiment, the tip end 315b of the wire body 315 may come into contact with the shaft-shaped body 101.

FIG. 1 illustrates an example in which a rack and a pinion gear are used as the moving device 50. However, this is an example, and the moving device 50 of the present invention is not limited to this as long as the moving device 50 can move the heating portion 11, the cooling portion 16, and the shielding portion 14. In addition, FIG. 1 illustrates an example in which the heating portion 11, the cooling portion 16, and the shielding portion 14 are moved with respect to the shaft-shaped body 101 which is fixed. However, the present invention is not limited to this form, and the shaft-shaped body 101 may be moved while the heating portion 11, the cooling portion 16, and the shielding portion 14 are fixed. Furthermore, FIG. 1 illustrates an example in which the axial direction of the shaft-shaped body 101 is in the up-down direction. However, the present invention is not limited to this, and the axial direction of the shaft-shaped body 101 may be in a horizontal direction, or the axial direction of the shaft-shaped body 101 may be inclined with respect to the up-down direction.

Moreover, a plurality of the brush portions 15 and 215 may be arranged in the movement direction of the shielding portions 14 and 214, or a plurality of the shielding portions 14 and 214 may be arranged in the movement direction thereof. Accordingly, the density of the wire bodies of the brush portions 15 and 215 is increased, and scattering of the scale can be more reliably prevented.

In the case where the plurality of brush portions 15 and 215 or the plurality of shielding portions 14 and 214 are arranged, the arrangements of the wire bodies of the brush portions 15 and 215 at the respective stages may be shifted from each other when viewed in the moving direction of the shielding portions 14 and 214. Accordingly, the density of the wire bodies of the brush portions 15 and 215 is further increased, and scattering of the scale can be more reliably prevented.

As described in the embodiments described above, it is preferable that the tip end 115b of the wire body 115, or the middle portion 315c or the tip end 315b of the wire body 315 comes into contact with the surface 102a of the shaft main body 102 of the shaft-shaped body 101. However, even if a part of the wire body does not come into contact with the shaft-shaped body but a part of the wire body is only close to the shaft-shaped body, the effect of reducing the scattering of the scale can be expected. In addition, some of the wire bodies may be configured to come into contact with the shaft-shaped body, and the other wire bodies may be configured to be close to the shaft-shaped body without coming into contacting the shaft-shaped body.

In addition, in the embodiments described above, the shaft-shaped body in which the large-diameter portion is provided in a part of the shaft main body is described as an example. However, the present invention can also be preferably applied to a shape such as a ball screw that does not have a large-diameter portion, which may cause a problem that a cooling liquid is scattered in the same manner as the shaft-shaped body according to the embodiments described above.

### [Brief Description of the Reference Symbols]

1: Induction hardening apparatus
12: Coil member
14, 214: Shielding portion
14a: Opening part
14b: Annular base portion
15, 215: Brush portion
16: Cooling portion
18: Spray nozzle
101: Shaft-shaped body
102: Shaft main body
103: Large-diameter portion
104: Level difference portion
115, 315: Wire body
L: Cooling liquid

## Claims

1. An induction hardening apparatus for performing induction hardening on a shaft-shaped body, the apparatus comprising:
a coil member which is formed in an annular shape to cause a high frequency current to flow therethrough, allows the shaft-shaped body to be inserted therein, and is relatively movable along an axial direction of the shaft-shaped body;
a cooling portion which has a spray nozzle through which a cooling liquid can be sprayed onto a surface of the shaft-shaped body, is disposed behind the coil member in a relative movement direction, and is relatively movable along the axial direction of the shaft-shaped body together with the coil member; and
a shielding portion which is disposed between the coil member and the cooling portion and is relatively movable along the axial direction of the shaft-shaped body together with the coil member and the cooling portion,
wherein the shielding portion comprises an annular base portion having an opening part through which the shaft-shaped body is inserted, and a brush portion that protrudes from the annular base portion toward the opening part and comes into contact with the shaft-shaped body when the shaft-shaped body is inserted, and
wherein the brush portion comprises a plurality of non-magnetic and elastically deformable wire bodies.

2. The induction hardening apparatus according to claim 1,
wherein a longitudinal direction of the wire body of the brush portion is directed to a center of the opening part.

3. The induction hardening apparatus according to claim 1,
wherein a longitudinal direction of the wire body of the brush portion is in a direction inclined with respect to a direction toward a center of the opening part, and is in a direction inclined toward a cooling portion side.

4. The induction hardening apparatus according to any one of claims 1 to 3,
wherein the wire body of the brush portion is made of austenitic stainless steel or glass fiber.

## Patentansprüche

1. Induktionshärtungsvorrichtung zum Durchführen einer Induktionshärtung an einem schaftförmigen Körper, wobei die Vorrichtung umfasst:
ein Spulenelement, das ringförmig ausgebildet ist, um zu bewirken, dass ein Hochfrequenzstrom hindurchfließt, das es ermöglicht, dass der schaftförmige Körper darin eingesetzt wird, und das entlang einer axialen Richtung des schaftförmigen Körpers relativ beweglich ist;
einen Kühlabschnitt, der eine Sprühdüse aufweist, durch die eine Kühlflüssigkeit auf eine Oberfläche des schaftförmigen Körpers gesprüht werden kann, der in einer relativen Bewegungsrichtung hinter dem Spulenelement angeordnet ist, und der zusammen mit dem Spulenelement entlang der axialen Richtung des schaftförmigen Körpers relativ beweglich ist; und
einen Abschirmungsabschnitt, der zwischen dem Spulenelement und dem Kühlabschnitt angeordnet ist und zusammen mit dem Spulenelement und dem Kühlabschnitt entlang der axialen Richtung des schaftförmigen Körpers relativ bewegbar ist,
wobei der Abschirmabschnitt einen ringförmigen Basisabschnitt mit einem Öffnungsteil, durch den der schaftförmige Körper eingeführt wird, und einen Bürstenabschnitt umfasst, der von dem ringförmigen Basisabschnitt in Richtung des Öffnungsteils vorsteht und in Kontakt mit dem schaftförmigen Körper kommt, wenn der schaftförmige Körper eingeführt wird, und
wobei der Bürstenabschnitt eine Vielzahl von nichtmagnetischen und elastisch verformbaren Drahtkörpern umfasst.

2. Induktionshärtungsvorrichtung nach Anspruch 1,
wobei eine Längsrichtung des Drahtkörpers des Bürstenabschnitts auf eine Mitte des Öffnungsteils gerichtet ist.

3. Induktionshärtungsvorrichtung nach Anspruch 1,
wobei eine Längsrichtung des Drahtkörpers des Bürstenabschnitts in einer Richtung liegt, die in Bezug auf eine Richtung zu einer Mitte des Öffnungsteils geneigt ist, und in einer Richtung liegt, die zu einer Seite des Kühlabschnitts geneigt ist.

4. Induktionshärtungsvorrichtung nach einem der Ansprüche 1 bis 3,
wobei der Drahtkörper des Bürstenabschnitts aus austenitischem rostfreiem Stahl oder Glasfaser hergestellt ist.

## Revendications

1. Appareil de durcissement par induction pour réaliser un durcissement par induction sur un corps en forme d'arbre, l'appareil comprenant :
un élément bobine qui se présente sous une forme annulaire pour amener un courant haute fréquence à circuler à travers lui, permet au corps en forme d'arbre d'être inséré à l'intérieur de lui, et est relativement mobile le long d'une direction axiale du corps en forme d'arbre ;
une portion de refroidissement qui a une buse de pulvérisation à travers laquelle un liquide de refroidissement peut être pulvérisé sur une surface du corps en forme d'arbre, est disposée derrière l'élément bobine dans une direction de mouvement relatif, et est relativement mobile le long de la direction axiale du corps en forme d'arbre en conjugaison avec l'élément bobine ; et
une portion de protection qui est disposée entre l'élément bobine et la portion de refroidissement et est relativement mobile le long de la direction axiale du corps en forme d'arbre conjointement avec l'élément bobine et la portion de refroidissement,
dans lequel la portion de protection comprend une portion base annulaire ayant une partie d'ouverture à travers laquelle est inséré le corps en forme d'arbre, et une portion balai qui fait saillie à partir de la portion base annulaire vers la partie d'ouverture et vient en contact avec le corps en forme d'arbre lorsque le corps en forme d'arbre est inséré, et
dans lequel la portion balai comprend une pluralité de corps filaires non magnétiques et élastiquement déformables.

2. Appareil de durcissement par induction selon la revendication 1,
dans lequel une direction longitudinale du corps filaire de la portion balai est dirigée vers un centre de la partie d'ouverture.

3. Appareil de durcissement par induction selon la revendication 1,
dans lequel une direction longitudinale du corps filaire de la portion balai est dans une direction inclinée par rapport à une direction vers un centre de la partie d'ouverture, et est dans une direction inclinée vers un côté portion de refroidissement.

4. Appareil de durcissement par induction selon l'une quelconque des revendications 1 à 3,
dans lequel le corps filaire de la portion balai est constitué d'acier inoxydable austénitique ou de fibre de verre.
